# EUROPEAN PATENT APPLICATION

(11) **EP 4 845 040 A1**
(43) Date of publication of application: **25.11.2026**
(21) Application number: 26180537.8
(22) Date of filing: 22.05.2026
(51) Int. Cl.: H04B 5/26, H04B 5/72, H04B 5/79

(54) **WIRELESS COMMUNICATION COIL PLATE AND COOKING DEVICE**

(30) Priority: 22.05.2025 CN 202521021942 U
(71) Applicant: Foshan Shunde Midea Electrical Heating Appliances Manufacturing Co., Limited, Foshan, Guangdong 528311 (CN)
(72) Inventor: MO, Yehui, Foshan, 528311 (CN); YE, Wenzhao, Foshan, 528311 (CN); XIE, Zhaojia, Foshan, 528311 (CN); LI, Xinning, Foshan, 528311 (CN); ZHENG, Liang, Foshan, 528311 (CN); CHENG, Zhixi, Foshan, 528311 (CN); CHEN, Weiwei, Foshan, 528311 (CN); WANG, Bo, Foshan, 528311 (CN); YANG, Fei, Foshan, 528311 (CN)
(74) Representative: Ran, Handong

(57) **Abstract**

The present application relates to the technical field of cooking devices, and provides a wireless communication coil plate and a cooking device. The wireless communication coil plate comprises a circuit board and a wire. The circuit board is provided with a substrate, a first pad, a second pad and a communication winding. The communication winding, the first pad and the second pad are arranged on the same side of the substrate in the thickness direction. At least one of the first pad and the second pad is connected to the communication winding via the wire.

## Description

### TECHNICAL FIELD

The present application relates to the technical field of cooking devices, and particularly to a wireless communication coil plate and a cooking device.

### BACKGROUND

This section is intended to provide background or context for the embodiments of the present application. The description herein is not admitted to be prior art merely by being comprised in this section.

A coil plate generally comprises a communication winding to realize a communication function. In the related art, the communication winding is formed by winding an enameled wire, which involves high processing difficulty and basically relies entirely on manual processing. As such, the manufacturing cost is higher than the material cost.

### SUMMARY

In view of this, the embodiments of the present application aim to provide a wireless communication coil plate and a cooking device, which can reduce manufacturing cost.

In a first aspect, the present application provides a wireless communication coil plate, comprising:
a circuit board provided with a substrate, a first pad, a second pad and a communication winding, wherein the communication winding, the first pad and the second pad are disposed on the same side of the substrate in a thickness direction;
a wire, wherein at least one of the first pad and the second pad is connected to the communication winding via the wire.

In some embodiments, the communication winding comprises a first winding and a second winding. At least part of the first winding and at least part of the second winding are spiral-shaped and arranged alternately at intervals, at least one of the first winding and the second winding being connected to the wire.

In some embodiments, the first winding and the second winding extend from a first end point toward opposite sides and then extend spirally outward, the first end point being connected to the first pad via the wire.

In some embodiments, the wire comprises a first wire, a second wire and a third wire. A second end point of the first winding and a second end point of the second winding are located on opposite sides in a first direction. The first pad and the second pad are disposed on the same side of the communication winding in a second direction. The first wire connects the second end point of the first winding with the second end point of the second winding. The second wire connects the first wire with the second pad. The third wire connects the first end point with the first pad. The first direction intersects the second direction.

In some embodiments, the wire comprises a fourth wire and a fifth wire. A second end point of the first winding and a second end point of the second winding are disposed on opposite sides in a third direction. The first pad and the second pad are located on the same side of the communication winding in the third direction.

The fourth wire connects the first end point with the first pad, the second end point of the first winding and the second end point of the second winding are connected to the second pad via the fifth wire.

In some embodiments, a part of the second winding extends from the first end point in the third direction to form a first straight section. The fifth wire is provided with a second straight section parallel to the first straight section.

In some embodiments, the fifth wire is provided with two curved sections respectively disposed at two ends of the second straight section. One of the curved sections is connected to the second end point of the first winding, the other of the curved sections is connected to the second end point of the second winding.

In some embodiments, the wire comprises a sixth wire. The circuit board comprises a first connecting line and a second connecting line. The first connecting line is arranged on an outer side of the communication winding and directly connected to the first pad, the second connecting line is arranged on the outer side of the communication winding and directly connected to the second pad. The first winding and the second winding extend spirally and in parallel from the first end point. A second end point of the first winding and a second end point of the second winding are connected to the second connecting line. The sixth wire connects the first connecting line with the first end point.

In some embodiments, the first pad and the second pad are disposed on an outer side of the communication winding.

In some embodiments, the wireless communication coil plate comprises an insulating member, and portions of the wire overlapping with the communication winding are wrapped by the insulating member.

In a second aspect, the present application provides a cooking device, which comprises the wireless communication coil plate as described above.

On the one hand, compared with a double-sided printed circuit board, the communication winding, the first pad and the second pad in the present application are all arranged on the same side of the substrate in the thickness direction, that is, the circuit board is a single-sided board, which can reduce production costs. On the other hand, it is unnecessary to adjust the routing mode of the communication winding according to the positions of the first pad and the second pad, instead, the focus is put on improving the routing mode and production process of the communication winding. Afterwards, the communication winding is connected to the first pad and the second pad via the wire, so that it has the characteristics of realizable communication function, good communication effect and low cost, meets market demands and enhances market competitiveness.

### BRIEF DESCRIPTION OF THE DRAWINGS

FIG. 1 is a schematic view of a wireless communication coil plate according to some embodiments of the present application.
FIG. 2 is a schematic view of a wireless communication coil plate in a production process according to other embodiments of the present application.
FIG. 3 is a schematic view of the structure shown in FIG. 2 after completion of production, where arrows exemplarily indicate the current flow direction.
FIG. 4 is a schematic view of a wireless communication coil plate according to other embodiments of the present application.

### List of reference symbols

1. Circuit board; 1a. First end point; 1b. Second end point;
11. First pad; 12. Second pad; 13. Substrate;
14. Communication winding; 14a. Second stacked section;
141. First winding; 141a. First spreading section; 142. Second winding; 142a. Second spreading section; 142b. First straight section;
15. First connecting line; 16. Second connecting line;
2. Wire; 2a. First stacked section;
21. First wire; 22. Second wire; 23. Third wire; 24. Fourth wire;
25. Fifth wire; 25a. Second straight section; 25b. Curved section; 25c. Side section;
26. Sixth wire.

### DETAILED DESCRIPTION

The embodiments of the present application will be described in further detail below with reference to the accompanying drawings and embodiments. The following embodiments are intended to illustrate the present application, but shall not be construed as limiting the scope thereof.

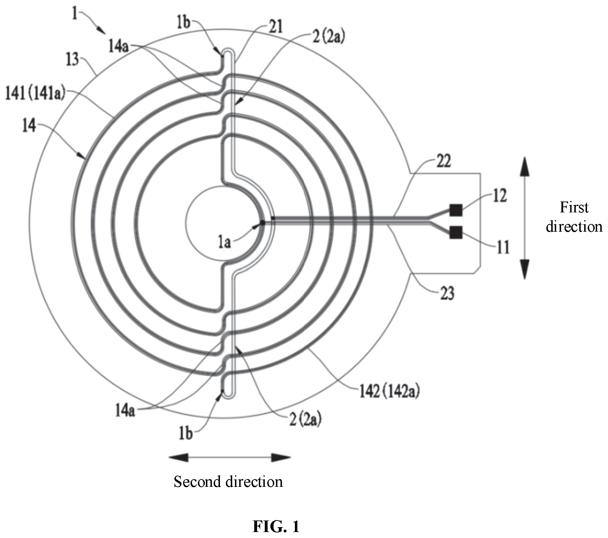

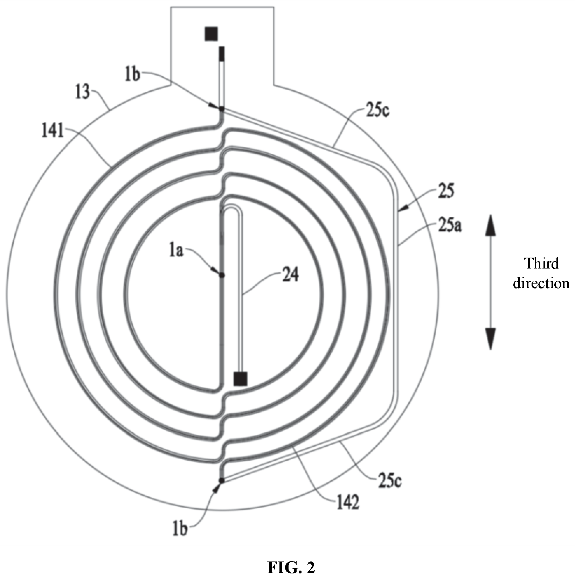

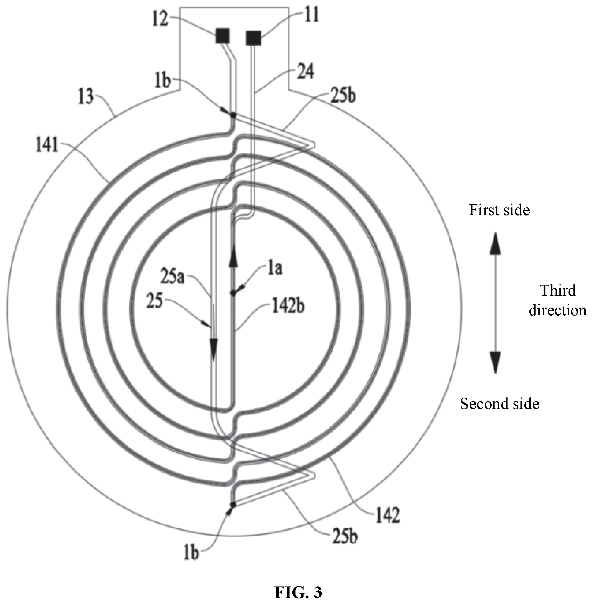

In the description of the embodiments of the present application, the orientation or positional relationship indicated by the "first direction" is understood based on the orientation or positional relationship shown in FIG. 1, the orientation or positional relationship indicated by the "second direction" is understood based on the orientation or positional relationship shown in FIG. 1, and the orientation or positional relationship indicated by the "third direction" is understood based on the orientation or positional relationship shown in FIG. 2 and FIG. 3. It should be understood that these directional terms are merely for the convenience of describing the embodiments of the present application and simplifying the description, and do not indicate or imply that the referred device or component must have a specific orientation, be constructed and operated in a specific orientation, and thus shall not be construed as a limitation to the embodiments of the present application.

Each specific technical feature and each embodiment described in the detailed description may be combined in any appropriate manner without conflict. For example, different implementations may be formed by combining different specific technical features or embodiments. To avoid unnecessary repetition, various possible combinations of each specific technical feature and embodiment in the present application will not be described separately. In addition, terms such as "first", "second" and "third" are used for descriptive purposes only and shall not be interpreted as indicating or implying relative importance of features. The present application will be described in further detail below with reference to the accompanying drawings and specific embodiments.

It should be noted that in the present application, the temperature unit "°C" refers to degrees Celsius. The radial direction is perpendicular to the thickness direction. The inner side refers to the side close to the center line in the radial direction, and the outer side is opposite to the inner side, i.e., the side away from the center line in the radial direction.

To facilitate understanding of the wireless communication coil plate according to the embodiments of the present application, the cooking device of the embodiments of the present application will be described first hereinafter.

The embodiments of the present application provide a cooking device, which comprises the wireless communication coil plate according to any embodiment of the present application. The wireless communication coil plate is provided with a Near Field Communication (NFC) function. Near Field Communication is a short-range wireless communication method based on Radio Frequency Identification (RFID) technology. The communication winding 14 can perform information interaction with an induction coil adapted to the NFC protocol without an additional power supply, which is convenient and efficient. The working frequency of the communication winding 14 is the same as the working frequency of the induction coil. In this way, the cooking device has a communication function, can interact with other matched devices such as mobile terminals, and improves user experience.

In one embodiment, the cooking device comprises a cooktop panel arranged above the wireless communication coil plate. The cooktop panel is configured for placing the cooking utensil such as cookware so as to support the cooking utensil.

In one embodiment, the wireless communication coil plate is provided with a power supply coil. That is, the cooking device has an electromagnetic heating function. Specifically, the power supply coil can generate an electromagnetic field when a high-frequency current is fed thereto. If a magnetically conductive cooking utensil is placed above the cooktop panel, the magnetically conductive cooking utensil resonates in the electromagnetic field and generates eddy currents during operation of the cooking device. Under the action of the eddy currents, the temperature of the magnetically conductive cooking utensil rises gradually, and food is cooked by the heated magnetically conductive cooking utensil.

The specific type of the cooking device is not limited. For example, the cooking device may be an induction cooker or an electromagnetic stove.

In the related art, if the coil plate is a double-sided printed circuit board, coils are patterned on both end surfaces of the substrate 13. Nevertheless, the production cost of the double-sided printed circuit board is still relatively high.

Please referring to FIG. 1 to FIG. 4, an embodiment of the present application provides a wireless communication coil plate, which comprises a circuit board 1. The circuit board 1 is provided with a substrate 13, a first pad 11, a second pad 12 and a communication winding 14. The communication winding 14, the first pad 11 and the second pad 12 are disposed on the same side of the substrate 13 in the thickness direction. At least one of the first pad 11 and the second pad 12 is connected to the communication winding 14 by a wire 2.

The first pad 11 and the second pad 12 are metallized areas for connecting the wire 2. The first pad 11 and the second pad 12 can be connected to an external circuit, so that current flows through the communication winding 14 via the wire 2. The communication winding 14 realizes a communication function after being energized.

The communication winding 14 refers to a coil or a coil assembly that realizes data transmission through electromagnetic coupling to achieve a communication function. In one example, the communication winding 14 may serve as a receiving end. In this case, when an external device such as cooking utensil is placed on the cooktop panel, the communication winding 14 receives a signal indicating completion of placement of the cooking utensil, and transmits the signal to the power supply coil, so that current is supplied to the power supply coil to generate a magnetic field and start heating the cooking utensil. Exemplarily, the communication winding 14 may also serve as a transmitting end. When an external device such as a mobile terminal approaches the cooking device, the communication winding 14 may transmit signals comprising various cooking modes to the mobile terminal, so that users can select different cooking modes according to ingredients, which improves user experience. Exemplarily, the communication winding 14 may function as a transceiving end, that is, the communication winding 14 is capable of receiving and transmitting signals.

The substrate 13 has a thickness direction, and the communication winding 14, the first pad 11 and the second pad 12 are located on the same side of the substrate 13 in the thickness direction. That is, the circuit board 1 is a single-sided board. The cost of the single-sided board is half of that of a double-sided printed circuit board, thereby reducing the production cost.

The expression "at least one of the first pad 11 and the second pad 12 is connected to the communication winding 14 via the wire 2" means that the first pad 11 may be connected to the communication winding 14 via the wire 2, or the second pad 12 may be connected to the communication winding 14 via the wire 2, or both the first pad 11 and the second pad 12 may be connected to the communication winding 14 via the wire 2.

The communication winding 14 is connected to the first pad 11 and the second pad 12 via the wire 2. In this way, there is no need to adjust the routing mode of the communication winding 14 according to the positions of the first pad 11 and the second pad 12; the focus can be placed on improving the routing mode and production process of the communication winding 14. The communication winding 14 is then connected to the first pad 11 and the second pad 12 via the wire 2. The structure has the characteristics of realizable communication function, good communication effect and low cost, meets market demands and enhances market competitiveness.

On the one hand, compared with a double-sided printed circuit board, the communication winding 14, the first pad 11 and the second pad 12 in the present application are all arranged on the same side of the substrate 13 in the thickness direction, that is, the circuit board 1 is a single-sided board, which can reduce production costs. On the other hand, it is unnecessary to adjust the routing mode of the communication winding 14 according to the positions of the first pad 11 and the second pad 12, instead, the focus is put on improving the routing mode and production process of the communication winding 14. Afterwards, the communication winding is connected to the first pad 11 and the second pad 12 via the wire 2, so that it has the characteristics of realizable communication function, good communication effect and low cost, meets market demands and enhances market competitiveness.

In one embodiment, the circuit board 1 is a flexible circuit board. The flexible circuit board is a flexible structure, which refers to a structure that is elastic, bendable, twistable and deformable. The preparation process of flexible circuit board is mature, and the production cost is lower. In addition, the flexible circuit board has favorable heat resistance and can reduce the impact of high temperature.

In one embodiment, the substrate 13 is of a polyimide structure. That is, the substrate 13 is made of polyimide.

In one embodiment, the substrate 13 is of a polyester film structure. That is, the substrate 13 is made of polyester film.

In an example, the types of the wire 2 comprise but are not limited to an enameled wire, jumper wire and the like.

In some embodiments, please referring to FIG. 1 to FIG. 4, the communication winding 14 comprises a first winding 141 and a second winding 142. At least part of the first winding 141 and at least part of the second winding 142 are spiral-shaped and arranged alternately at intervals. At least one of the first winding 141 and the second winding 142 is connected to the wire 2. Specifically, the first winding 141 is electrically connected to the second winding 142. On the one hand, the magnetic fields generated by the first winding 141 and the second winding 142 can be superimposed at the central position, which significantly improves the signal strength. On the other hand, the length of the communication winding 14 can be increased within a limited area while maintaining the turn-to-turn spacing of the communication winding 14, which is beneficial to insulation protection and heat dissipation. In addition, it is possible to reduce the bending routing of the communication winding 14, so as to prolong the service life of the communication winding.

In one example, with reference to FIG. 1, the first winding 141 is provided with a first spreading section 141a, and the second winding 142 is provided with a second spreading section 142a. The first spreading section 141a and the second spreading section 142a are spiral-shaped, and arranged alternately at intervals. In one embodiment, the first spreading section 141a and the second spreading section 142a have the same winding direction. With reference to FIG. 1, both the first spreading section 141a and the second spreading section 142a may be wound clockwise, or both may be wound counterclockwise.

The expression "at least one of the first winding 141 and the second winding 142 is connected to the wire 2" may mean that the first winding 141 is connected to the wire 2, the second winding 142 is connected to the wire 2, or both the first winding 141 and the second winding 142 are connected to the wire 2.

[**0058]** In some embodiments, with reference to FIG. 1, the first winding 141 and the second winding 142 extend toward opposite sides from the first end point 1a and then extend spirally outward. The first end point 1a is connected to the first pad 11 via the wire 2. That is, the first winding 141 and the second winding 142 are centrosymmetric about the first end point 1a. On the one hand, the flow directions of current in the first winding 141 and the second winding 142 are substantially consistent, which can enhance the signal transmission effect. On the other hand, a longer wiring length can be achieved within a limited space for arranging the high-density communication winding 14, so as to improve the communication effect.

[**0059]** In one example, with reference to FIG. 1, the first end of the first winding 141 and the first end of the second winding 142 are connected to one another at the first end point 1a. In this way, the number of end points of the communication winding 14 can be reduced, thereby cutting down the number of wires 2, and rendering the routing mode of the circuit board 1 concise, regular and orderly.

[**0060]** In some embodiments, with reference to FIG. 1, the wire 2 comprises a first wire 21, a second wire 22 and a third wire 23. The second end point 1b of the first winding 141 and the second end point 1b of the second winding 142 are disposed on two opposite sides in the first direction. The first pad 11 and the second pad 12 are located on the same side of the communication winding 14 in the second direction. The first wire 21 connects the second end point 1b of the first winding 141 with the second end point 1b of the second winding 142, the second wire 22 connects the first wire 21 with the second pad 12, and the third wire 23 connects the first end point 1a with the first pad 11. The first direction intersects the second direction.

[**0061]** In one example, with reference to FIG. 1, the second end point 1b of the first winding 141 and the second end point 1b of the second winding 142 are centrosymmetric about the first end point 1a. The first wire 21 connects the second end point 1b of the first winding 141 with the second end point 1b of the second winding 142. In this way, the first winding 141 and the second winding 142 form a symmetric loop, which can offset common-mode noise and reduce signal interference. In addition, the centrosymmetric routing mode of the first winding 141 and the second winding 142 effectively disperses stress, makes the stress on the substrate 13 relatively uniform, and reduces the risk of cracking of the substrate 13.

[**0062]** The first pad 11 and the second pad 12 are disposed on the same side of the communication winding 14 in the second direction. Thus, the signal return path is shortened, the coupling interference between the second wire 22 and the third wire 23 is reduced, and the risk of crosstalk is lowered. In addition, it facilitates connection of the first pad 11 and the second pad 12 to an external circuit.

[**0063]** In one example, with reference to FIG. 1, both the second wire 22 and the third wire 23 extend in the second direction and extend in parallel.

[**0064]** In this embodiment, the first winding 141 and the second winding 142 are connected in series. The first direction and the second direction may intersect obliquely or perpendicularly.

[**0065]** In some embodiments, with reference to FIG. 2 and FIG. 3, the wire 2 comprises a fourth wire 24 and a fifth wire 25. The second end point 1b of the first winding 141 and the second end point 1b of the second winding 142 are arranged on two opposite sides in the third direction. The first pad 11 and the second pad 12 are located on the same side of the communication winding 14 in the third direction. The fourth wire 24 connects the first end point 1a with the first pad 11, and the fifth wire 25 connects the second end point 1b of the first winding 141 with the second end point 1b of the second winding 142.

[**0066]** In one example, with reference to FIG. 3, the first pad 11, the second pad 12, the second end point 1b of the first winding 141 and the second end point 1b of the second winding 142 are arranged at intervals in the third direction. This facilitates routing layout of the fourth wire 24 and the fifth wire 25.

[**0067]** The first pad 11 and the second pad 12 are disposed on the same side of the communication winding 14 in the third direction. Thus, the signal return path is shortened, coupling interference between the fourth wire 24 and the fifth wire 25 is reduced, and the risk of crosstalk is lowered. In addition, it facilitates connection of the first pad 11 and the second pad 12 to an external circuit.

[**0068]** With reference to FIG. 3, the fifth wire 25 connects the second end point 1b of the first winding 141 with the second end point 1b of the second winding 142. As such, the first winding 141 and the second winding 142 form a symmetrical loop, which can offset common-mode noise and reduce signal interference. In addition, the centrosymmetric routing mode of the first winding 141 and the second winding 142 effectively disperses stress, makes the stress on the substrate 13 relatively uniform, and lowers the cracking risk of the substrate 13.

[**0069]** In this embodiment, the first winding 141 and the second winding 142 are connected in series. The connection between the communication winding 14 and the first pad 11, and the connection between the communication winding 14 and the second pad 12 are achieved by only two wires 2, namely the fourth wire 24 and the fifth wire 25, thereby reducing production costs.

[**0070]** In some embodiments, with reference to FIG. 2 and FIG. 3, a part of the second winding 142 extends in the third direction from the first end point 1a to form a first straight section 142b. The fifth wire 25 is provided with a second straight section 25a parallel to the first straight section 142b. It can be appreciated that the flow direction of the current of the first straight section 142b is opposite to that of the second straight section 25a. In one example, with reference to FIG. 3, the current of the first straight section 142b generally flows toward the first side in the third direction, and the current of the second straight section 25a generally flows toward the second side in the third direction. Thus, the direction of the magnetic field outside the first straight section 142b is opposite to the direction of the magnetic field outside the second straight section 25a. As such, the magnetic fields formed by the first straight section and the second straight section can counteract each other, so as to reduce electromagnetic interference and enhance the signal transmission effect.

[**0071]** In some embodiments, with reference to FIG. 3, the fifth wire 25 is provided with two curved sections 25b respectively disposed at two ends of the second straight section 25a. One of the curved sections 25b is connected to the second end point 1b of the first winding 141, and the other one is connected to the second end point 1b of the second winding 142.

[**0072]** In this embodiment, with reference to FIG. 2 and FIG. 3, during the production process of the wireless communication coil plate, the fifth wire 25 is provided with two side sections 25c respectively arranged at two ends of the second straight section 25a. Both the two side sections 25c and the second straight section 25a are located on the outer side of the communication winding 14. In this way, the risk of interference between the fifth wire and the communication winding 14 can be reduced, and the risk of wire crossing can be lowered. Further, when the production of the wireless communication coil plate is completed, the two side sections 25c are bent to form two curved sections 25b. As such, the problem of overlapping wire 2 at the curved sections 25b can be avoided, thereby preventing abrasion and wear on the outer surfaces of the curved sections 25b.

[**0073]** In an embodiment, with reference to FIG. 2, on a projection plane perpendicular to the third direction, the projection of the region enclosed by the two side sections 25c and the second straight section 25a has a trapezoidal shape.

[**0074]** In another embodiment, on a projection plane perpendicular to the third direction, the projection of the region enclosed by the two side sections 25c and the second straight section 25a has a rectangular shape. In this way, the length of the second straight section 25a is relatively large, which increases the length of the portion parallel to the first straight section 142b, further reduces electromagnetic interference, and improves the signal transmission effect.

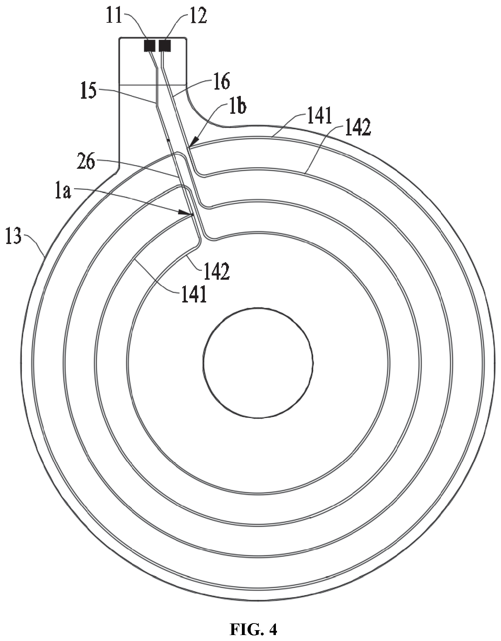

[**0075]** In some embodiments, with reference to FIG. 4, the wire 2 comprises a sixth wire 26, and the circuit board 1 comprises a first connecting line 15 and a second connecting line 16. The first connecting line 15 is located on the outer side of the communication winding 14 and directly connected to the first pad 11. The second connecting line 16 is located on the outer side of the communication winding 14 and directly connected to the second pad 12. The first winding 141 and the second winding 142 extend spirally and in parallel from the first end point 1a. The second end point 1b of the first winding 141 and the second end point 1b of the second winding 142 are connected to the second connecting line 16. The sixth wire 26 connects the first connecting line 15 with the first end point 1a.

[**0076]** The first connecting line 15 and the second connecting line 16 do not occupy the installation space for the communication winding 14, and the first connecting line 15 and the second connecting line 16 do not interfere with the communication winding 14, thereby lowering the risk of wire crossing.

[**0077]** In this embodiment, the first winding 141 and the second winding 142 are connected in parallel. In this way, the winding direction of the first winding 141 is identical to that of the second winding 142. In one example, both the first winding 141 and the second winding 142 can be wound in a clockwise direction, and may also be wound in a counterclockwise direction. The flow direction of the current of the first winding 141 is substantially the same as the flow direction of the current of the second winding 142, for instance, both flow clockwise. As such, the magnetic field coupling efficiency can be enhanced, which is particularly suitable for high-frequency communication or radio frequency circuits, reduces signal transmission loss, improves communication effect, and achieves better operational reliability.

[**0078]** In some embodiments, with reference to FIG. 1, FIG. 3 and FIG. 4, both the first pad 11 and the second pad 12 are disposed on the outer side of the communication winding 14. That is to say, the first pad 11 and the second pad 12 do not occupy the wiring space for the communication winding 14. On the one hand, it facilitates the connection between the first pad 11, the second pad 12 and an external circuit; the external circuit will not interfere with the communication winding 14, which makes the wiring mode of the circuit board 1 concise, regular and orderly, and reduces signal interference. On the other hand, a longer wiring length can be obtained in a limited space, which is suitable for arranging the high-density communication winding 14 so as to improve the communication effect.

[**0079]** In some embodiments, the wireless communication coil plate comprises an insulating member. The portions of the wire 2 overlapping with the communication winding 14 are wrapped by the insulating member.

[**0080]** The insulating member is a structure made of insulating material and can perform an insulating function.

[**0081]** The expression " portions of the wire 2 overlapping with the communication winding 14" means that part of the wire 2 and part of the communication winding 14 are stacked in the thickness direction. In one example, with reference to FIG. 1, the wire 2 is provided with a first stacked section 2a, the communication winding 14 is provided with a second stacked section 14a, and the first stacked section 2a and the second stacked section 14a are stacked in the thickness direction. The outer peripheries of the first stacked section 2a and the second stacked section 14a are wrapped by the insulating member.

[**0082]** On the one hand, part of the wire 2 and part of the communication winding 14 are stacked in the thickness direction. This saves space and provides more installation space for the remaining communication winding 14, allowing the communication winding 14 to be arranged neatly and avoiding winding disorder. On the other hand, the insulating member can prevent wear caused by friction between the wire 2 and the communication winding 14, reduce electromagnetic interference, and ensure the stability of signal transmission.

[**0083]** In some embodiments, the cooking device comprises an adhesive structure. The adhesive structure bonds the communication winding 14 to the substrate 13. On the one hand, the connection stability between the communication winding 14 and the substrate 13 can be enhanced. On the other hand, the shape and position of the communication winding 14 bonded to the substrate are substantially unchanged, so that the winding spacing of the communication winding 14 may always meet design requirements, signal interference is reduced, and the operational reliability of the communication winding 14 is improved.

[**0084]** In an embodiment, the adhesive structure is adhesive glue.

[**0085]** In an embodiment, the adhesive structure may be a high-temperature resistant adhesive glue. The high-temperature resistant adhesive glue is glue capable of maintaining good performance in a high-temperature environment. In one example, the adhesive structure can withstand a temperature of 235°C and above, that is, the adhesive structure will not deform at a temperature of 235°C and above. As such, the adhesive structure can still maintain excellent bonding performance in a high-temperature environment.

[**0086]** In the description of the present specification, the terms such as "an embodiment", "another embodiment", "some embodiments", "other embodiments" and "in one example" means that specific features, structures, materials or characteristics described in conjunction with the embodiment or example are comprised in at least one embodiment or example of the embodiments of the present application. In the present specification, schematic expressions of the above terms do not necessarily refer to the same embodiment or example. Moreover, the described specific features, structures, materials or characteristics may be combined in any suitable manner in one or more embodiments or examples. In addition, those skilled in the art may combine and collate different embodiments or examples described in the present specification as well as features of different embodiments or examples.

[**0087]** The various embodiments/implementations in the present application may be combined with each other without contradiction. The above are merely preferred embodiments of the present application, and are not intended to limit the present application. Various modifications and variations can be made to the present application by those skilled in the art. Any modification, equivalent replacement, improvement and the like made within the spirit and principle of the present application shall fall within the protection scope of the present application.

## Claims

1. A wireless communication coil plate, comprising:
a circuit board (1) provided with a substrate (13), a first pad (11), a second pad (12) and a communication winding (14), wherein the communication winding (14), the first pad (11) and the second pad (12) are disposed on the same side of the substrate (13) in a thickness direction; and
a wire (2), wherein at least one of the first pad (11) and the second pad (12) is connected to the communication winding (14) via the wire.

2. The wireless communication coil plate according to claim 1, wherein the communication winding (14) comprises a first winding (141) and a second winding (142), at least part of the first winding (141) and at least part of the second winding (142) being spiral-shaped and arranged alternately at intervals, and at least one of the first winding (141) and the second winding (142) being connected to the wire.

3. The wireless communication coil plate according to claim 2, wherein the first winding (141) and the second winding (142) extend from a first end point (1a) toward opposite sides and then extend spirally outward, the first end point (1a) being connected to the first pad (11) via the wire.

4. The wireless communication coil plate according to claim 3, wherein:
the wire (2) comprises a first wire (21), a second wire (22) and a third wire (23);
a second end point (1b) of the first winding (141) and a second end point (1b) of the second winding (142) are located on opposite sides in a first direction; and
the first pad (11) and the second pad (12) are disposed on the same side of the communication winding (14) in a second direction,
wherein:
the first wire (21) connects the second end point (1b) of the first winding (141) with the second end point (1b) of the second winding (142), the second wire (22) connects the first wire (21) with the second pad (12), and the third wire (23) connects the first end point (1a) with the first pad (11); and
the first direction intersects the second direction.

5. The wireless communication coil plate according to claim 3, wherein:
the wire (2) comprises a fourth wire (24) and a fifth wire (25);
a second end point (1b) of the first winding (141) and a second end point (1b) of the second winding (142) are disposed on opposite sides in a third direction; and
the first pad (11) and the second pad (12) are located on the same side of the communication winding (14) in the third direction,
wherein the fourth wire (24) connects the first end point (1a) with the first pad (11), and the second end point (1b) of the first winding (141) and the second end point (1b) of the second winding (142) are connected to the second pad (12) via the fifth wire (25).

6. The wireless communication coil plate according to claim 5, wherein a part of the second winding (142) extends from the first end point (1a) in the third direction to form a first straight section (142b), and the fifth wire (25) is provided with a second straight section (25a) parallel to the first straight section (142b).

7. The wireless communication coil plate according to claim 6, wherein the fifth wire (25) is provided with two curved sections (25b) respectively disposed at two ends of the second straight section (25a), one of the curved sections (25b) being connected to the second end point (1b) of the first winding (141), and the other of the curved sections (25b) being connected to the second end point (1b) of the second winding (142).

8. The wireless communication coil plate according to claim 3, wherein:
the wire (2) comprises a sixth wire (26);
the circuit board (1) comprises a first connecting line (15) and a second connecting line (16), the first connecting line (15) being arranged on an outer side of the communication winding (14) and directly connected to the first pad (11), and the second connecting line (16) being arranged on the outer side of the communication winding (14) and directly connected to the second pad (12); and
the first winding (141) and the second winding (142) extend spirally and in parallel from the first end point (1a),
wherein a second end point (1b) of the first winding (141) and a second end point (1b) of the second winding (142) are connected to the second connecting line (16), and the sixth wire (26) connects the first connecting line (15) with the first end point (1a).

9. The wireless communication coil plate according to claim 1, wherein the first pad (11) and the second pad (12) are disposed on an outer side of the communication winding (14).

10. The wireless communication coil plate according to claim 1, further comprising an insulating member, wherein a portion of the wire (2) and a portion of the communication winding (14) that overlap each other are each wrapped with the insulating member.

11. A cooking device, comprising the wireless communication coil plate according to any one of claims 1 to 10.
